(19) **Europäisches Patentamt**

**European Patent Office**

**Office européen des brevets**

(11) **EP 1 105 964 B1**

(12) **EUROPÄISCHE PATENTSCHRIFT**

(45) Veröffentlichungstag und Bekanntmachung des Hinweises auf die Patenterteilung:
**20.10.2004   Patentblatt 2004/43**

(21) Anmeldenummer: **99952254.3**

(22) Anmeldetag: **02.08.1999**

(51) Int Cl.⁷: **H02P 5/168**, F04D 27/00, G01P 13/00

(86) Internationale Anmeldenummer:
**PCT/DE1999/002392**

(87) Internationale Veröffentlichungsnummer:
**WO 2000/010244 (24.02.2000 Gazette 2000/08)**

(54) **SCHALTUNGSANORDNUNG ZUM REGELN DER DREHZAHL EINES LÜFTERS**

CIRCUIT FOR REGULATING THE ROTATIONAL SPEED OF A FAN

CIRCUIT POUR REGULER LA VITESSE DE ROTATION D'UN VENTILATEUR

(84) Benannte Vertragsstaaten:
**FR GB IT**

(30) Priorität: **14.08.1998  DE 19837014**

(43) Veröffentlichungstag der Anmeldung:
**13.06.2001   Patentblatt 2001/24**

(73) Patentinhaber: **Fujitsu Siemens Computers GmbH**
**80807 München (DE)**

(72) Erfinder: **BUSCH, Peter**
**D-86179 Augsburg (DE)**

(74) Vertreter: **Epping, Hermann, Fischer**
**Patentanwaltsgesellschaft mbH**
**Ridlerstrasse 55**
**80339 München (DE)**

(56) Entgegenhaltungen:
**DE-A- 2 913 838          US-A- 4 513 233**
**US-A- 5 731 671**

## Beschreibung

Die Erfindung betrifft eine Schaltungsanordnung zum Regeln der Drehzahl eines Lüfters gemäß dem Oberbegriff des Anspruchs 1 beziehungsweise 3.

In elektrischen Geräten wie beispielsweise Personal Computer sind zur Kühlung elektrischer und elektronischer Komponenten elektronisch geregelte Lüfter eingesetzt. Zur elektronischen Regelung des Lüfters ist ein sogenannter Shunt-Widerstand vorgesehen, der in Reihe zum Lüfter in die Lüfterversorgungsleitungen geschaltet ist. Der Shunt-Widerstand dient zur Erfassung des Betriebsstroms des Lüfters. Die am Shunt-Widerstand abfallende Shunt-Spannung ist einer Drehzahlausweiteschaltung zugeführt. Sie filtert die der Shunt-Spannung überlagerten Kommutierungsimpulse heraus, die durch Kommutierungsvorgänge an den Antriebsspulen des Lüfters hervorgerufen sind.

Unter der Voraussetzung, dass nur sogenannte reguläre Kommutierungsimpulse, das sind solche, die durch die Kommutierungsvorgänge unvermeidlich sind, auftreten, ist der zeitliche reguläre Kommutierungsabstand zwischen den herausgefilterten Kommutierungsimpulsen ein Maß für die Drehzahl, mit der der Lüfter augenblicklich dreht. Ein kürzerer Kommutierungsimpulsabstand zeigt einen schneller und ein längerer einen langsamer drehenden Lüfter an.

Zur Regelung der Drehzahl des Lüfters schalten die herausgefilterten Kommutierungsimpulse eine der Drehzahlausweiteschaltung nachgeschaltete erste nachtriggerbare Monoflopschaltung jeweils für eine vorgegebene Zeitdauer gemäß einer ersten Zeitkonstante logisch High. Solange die erste nachtriggerbare Monoflopschaltung logisch High geschaltet ist, regelt ein der ersten nachtriggerbaren Monoflopschaltung nachgeschalteter Integrator direkt oder indirekt eine Betriebsspannung des Lüfters fortwährend abwärts. Ansonsten regelt der Integrator die Betriebsspannung fortwährend aufwärts.

Abhängig von einem betragsmäßigen Steilheitsverhältnis v von einer Aufwärts- zu einer Abwärtsregelungssteilheit des Integrators stellt sich in einem eingeschwungenen Zustand der Gesamtregelung wiederum ein festes Verhältnis zwischen der ersten Zeitkonstante der ersten nachtriggerbaren Monoflopschaltung und dem regulären Kommutierungsimpulsabstand ein. In dem Sonderfall, dass dieses Steilheitsverhältnis 1:1 ist, stellt sich im eingeschwungenen Zustand der Gesamtregelung eine Lüfterdrehzahl und in dessen Folge ein zugeordneter regulärer Kommutierungsabstand ein, der doppelt so lang wie die erste Zeitkonstante der ersten nachtriggerbaren Monoflopschaltung ist.

Es gelten in einem eingeschwungenen Zustand allgemein folgende Beziehungen:

$$T_{reg} = t_{1reg} + t_{2reg} = (1+1/v) * t_{1reg} \text{ und } t_{1reg} = ZK1 ;$$

Mit v = 1 :

$$T_{reg} = 2 * t_{1reg} \text{ und } t_{1reg} = ZK1 = \frac{1}{2} * T_{reg} ;$$

v       betragsmäßiges Steilheitsverhältnis von Aufwärts- zu Abwärtsregelungssteilheit;

$T_{reg}$:   regulärer Kommutierungsabstand;

$t_{1reg}$:   reguläre Zeitdauer der logisch High geschalteten ersten nachtriggerbaren Monoflopschaltung;

$t_{2reg}$:   reguläre Zeitdauer der logisch Low geschalteten ersten nachtriggerbaren Monoflopschaltung; und

ZK1:   erste Zeitkonstante der ersten nachtriggerbaren Monoflopschaltung.

Gerät die Drehzahl des Lüfters in ein Ungleichverhältnis zur ersten Zeitkonstante, beispielsweise weil die erste Zeitkonstante verändert wird, erfolgt je nach Veränderungsrichtung eine Beschleunigung oder Verlangsamung der Lüfterdrehzahl.

Die Komponenten zum Regeln der Drehzahl des Lüfters sind in der Weise untereinander abgestimmt, dass die Geschwindigkeitsänderung der Ausgangsspannung des Integrators beziehungsweise die davon abhängige Betriebsspannung des Lüfters langsamer ist als die Möglichkeit des Lüfters, sich an die Änderungen der Betriebsspannung anzupassen.

Ein Stand der Technik, wie er oben beschrieben ist, ist beispielsweise aus EP 0 782 787 B1 bekannt.

Ein Problem ergibt sich daraus, dass bei manchen Lüftern bei einer sehr niedrigen Betriebsspannung der Betriebsstrom plötzlich oszilliert. Eine solche Oszillation führt dazu, dass die Drehzahlausweiteschaltung eine sehr hohe Drehzahl des Lüfters erkennt. Bei einer solchen Oszillation treten Oszillationsimpulse auf, deren Osziliationsabstand wesentlich kleiner als die erste Zeitkonstante der ersten nachtriggerbaren Monoflopschaltung ist. Die Monoflopschaltung wird daher ständig nachgetriggert. Die Folge davon ist, dass der Integrator die Betriebsspannung, obwohl es nötig wäre, nicht erhöht sondern umgekehrt noch erniedrigt. Das Problem besteht darin, dass bei sehr niedrigen Betriebsspannungen der Lüfter wegen Reibungsverlusten stehen bleiben kann, ohne dass die Schaltungsanordnung aus dem Oszillationszustand herauskommt. Ohne äußeren Anstoß wird es dann zu keiner Änderung der Situation mehr kommen.

Bezüglich des Oszillationsabstandes $T_{osz}$ gelten folgende Beziehungen:

$$T_{osz} \ll T_{reg} ,$$

beziehungsweise ungefähr

$$0 < T_{osz} \leq 10\% \text{ von } T_{reg} .$$

Ein anderes Problem ist dadurch gegeben, dass verschiedene Lüfter bei den Kommutierungsvorgängen nicht nur jeweils reguläre Kommutierungsimpulse sondern jeweils auch gleich wenigstens einen nachfolgenden Störimpuls erzeugen mit einem ungefähren Störabstand $T_{stör}$ gemäß der Beziehung:

$$0{,}1*T_{reg} < T_{stör} \leq 0{,}25*T_{reg} ,$$

Auch in diesem Fall wird der Drehzahlauswerteschaltung ein zu schnell drehender Lüfter vorgetäuscht, weil die erste nachtriggerbare Monoflopschaltung wieder ständig nachgetriggert wird. Der Lüfter wird daher auch in diesem Fall fälschlicherweise abgebremst.

Die Eigenschaft der Monoflopschaltung, nachtriggerbar zu sein, ist notwendig, um zu verhindern, dass der Lüfter bei einem Mehrfachen einer gewünschten Nenndrehzahl einrastet.

Aufgabe der vorliegenden Erfindung ist es, eine Schaltungsanordnung der eingangs genannten Art anzugeben, bei der auch bei einer Oszillation des Betriebsstroms eine Regelung der Drehzahl eines Lüfters möglich ist.

Diese Aufgabe wird erfindungsgemäß durch die Merkmale entweder des Anspruchs 1 oder des Anspruchs 3 gelöst.

Die Lösung gemäß Anspruch 1 sieht zwischen der Drehzahlauswerte- und der ersten nachtriggerbaren Monoflopschaltung eine zweite nachtriggerbare Monoflopschaltung mit einer fest eingestellten zweiten Zeitkonstante größer dem zeitlichen Oszillationsabstand vor. Außerdem sieht sie vor, dass die Nachtriggerbarkeit der ersten nachtriggerbaren Monoflopschaltung nach einem jeweiligen logischen High-Schalten der ersten nachtriggerbaren Monoflopschaltung für eine Zeitdauer größer dem zeitlichen Störabstand gesperrt geschaltet ist.

Mit Hilfe der zweiten nachtriggerbaren Monoflopschaltung mit einer fest eingestellten zweiten Zeitkonstante größer dem Oszillationsabstand wird erreicht, dass bei Auftreten von Oszillationen die zweite nachtriggerbare Monoflopschaltung fortwährend nachgetriggert wird, so dass die nachfolgende erste nachtriggerbare Monoflopschaltung nur einmal durch die zweite nachtriggerbare Monoflopschaltung logisch High geschaltet wird. Nach Ablauf der ersten Zeitkonstante kann die erste nachtriggerbare Monoflopschaltung wieder in den logischen Low-Zustand übergehen. Von diesem Zeitpunkt an steuert der Integrator die Betriebsspannung des Lüfters aufwärts. Der Lüfter gelangt hierdurch aus seinem oszillierenden Zustand. Daher kann auch die zweite nachtriggerbare Monoflopschaltung wieder in den logischen Low-Zustand schalten. Von diesem Augenblick an übernimmt die erste nachtriggerbare Monoflopschaltung die Regelung wie bisher. Der Lüfter gelangt schließlich zu seiner Nenndrehzahl.

Treten Störimpulse ohne Oszillationen auf, werden diese von der ersten nachtriggerbaren Monoflopschaltung dadurch abgefangen, dass die erste nachtriggerbare Monoflopschaltung quasi nur noch bedingt nachtriggerbar ist. Die Möglichkeit der Nachtriggerung wird erst freigeschaltet, wenn die Zeitspanne für das Auftreten von Störimpulsen vorbei ist. Mit anderen Worten, es ist bei einer Nachtriggerung davon auszugehen, dass der Anstoß hierfür von einem Kommutierungsimpuls und nicht von einem Störimpuls gekommen ist.

Treten Störimpulse und Oszillationen gleichzeitig auf, ist die erste nachtriggerbare Monoflopschaltung für die Störimpulse und die zweite nachtriggerbare Monoflopschaltung für die Oszillationen wie oben beschrieben zuständig.

Die Lösung gemäß Anspruch 3 sieht zwischen der Drehzahlauswerte- und der ersten nachtriggerbaren Monoflopschaltung eine zweite nachtriggerbare Monoflopschaltung mit einer variablen, parallel und gleichsinnig mit der ersten Zeitkonstante variierten zweiten Zeitkonstante größer einem durch die erste Zeitkonstante jeweils bedingten Störabstand und kleiner der ersten Zeitkonstante vor.

Danach unterdrückt die zweite nachtriggerbare Monoflopschaltung sowohl Oszillationen als auch Störimpulse, so dass bei der ersten nachtriggerbaren Monoflopschaltung eine Unterdrückung der Nachtriggerbarkeit für eine vorgegebene Zeitdauer nach einer Triggerung entfallen kann. Oszillationsimpulse verursachen ein ständiges Nachtriggern der zweiten nachtriggerbaren Monoflopschaltung, so dass die erste nachtriggerbare Monoflopschaltung wieder in den logischen Low-Zustand schalten kann, woraufhin der Integrator die Betriebsspannung erhöht und den Lüfter aus dem oszillierenden Zustand bringt. Die Störimpulse werden abgefangen, da die Störimpulse höchstens nach einem Viertel der Zeitdauer des regulären Kommutierungsabstandes auftreten, der reguläre Kommutierungsabstand wie auch der Störabstand im eingeschwungenen Zustand von der ersten Zeitkonstante abhängen und die zweite Zeitkonstante kleiner als die erste Zeitkonstante ist. Die zweite nachtriggerbare Monoflopschaltung ist daher durch den Störimpuls nachgetriggert. Die erste nachtriggerbare Monoflopschaltung ist vom Störimpuls unbeeinflusst. Vor dem nächsten regulären Kommutierungsimpuls ist die zweite nachtriggerbare Monoflopschaltung wieder in den logischen Low-Zustand geschaltet. Die erste nachtriggerbare Monoflopschaltung kann daher auf den ankommenden nächsten regulären Kommutierungsimpuls in entsprechend richtiger Weise reagieren.

Eine vorteilhafte Ausgestaltung der Erfindung ist Gegenstand eines Unteranspruchs.

Danach ist ausgehend von einer Lösung gemäß Anspruch 1 die Zeitdauer der fest eingestellten zweiten Zeitkonstante größer als der zeitliche Störabstand und kleiner als die erste Zeitkonstante.

Eine derartige Konfiguration erlaubt auch ohne den erhöhten Aufwand der zusätzlichen Abstimmung der zweiten Zeitkonstante mit einer gewünschten Nenndrehzahl des Lüfters sowohl Oszillations- als auch Störimpulse zu unterdrücken.

Nachfolgend wird ein Ausführungsbeispiel der Erfindung anhand einer Zeichnung näher erläutert. Darin zeigen

Figur 1  eine Schaltungsanordnung zur Regelung der Drehzahl eines Lüfters gemäß dem Stand der Technik in Prinzipdarstellung und

Figur 2  eine Schaltungsanordnung zur Regelung der Drehzahl eines Lüfters gemäß der Erfindung ebenfalls in Prinzipdarstellung.

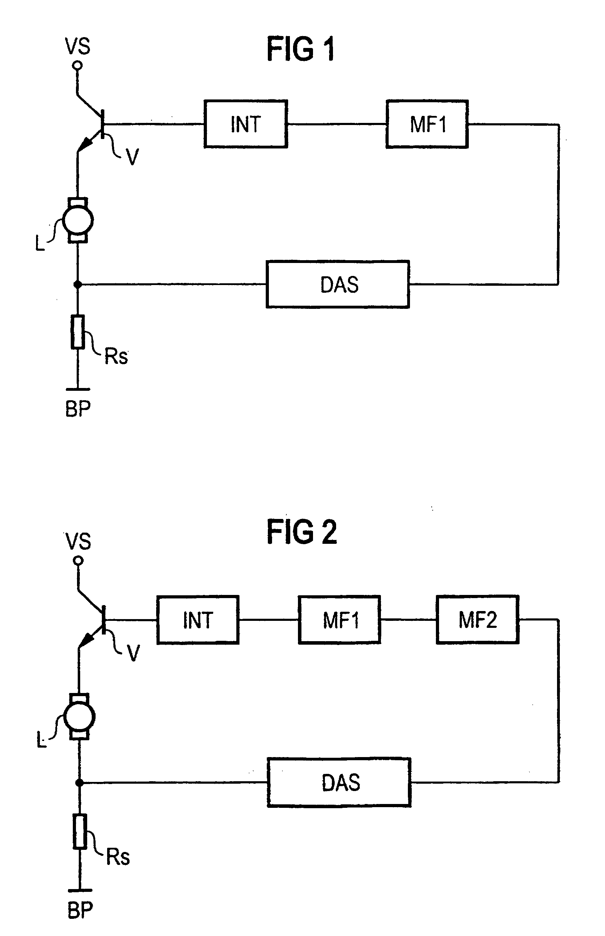

In den Figuren 1 und 2 sind gleiche Gegenstände mit einem gleichen Bezugszeichen versehen. Der Grundaufbau der Schaltungsanordnung zur Regelung der Drehzahl eines Lüfters L besteht, wie Figur 1 zeigt, aus einem Verstärker V, dem Lüfter L, einem Shunt-Widerstand Rs, einer Drehzahlausschalteschaltung DAS, einer ersten nachtriggerbaren Monoflopschaltung MF1 und einem Integrator INT. Der Verstärker V, der Lüfter L und der Shunt-Widerstand Rs sind in dieser Reihenfolge in Reihe zwischen einer Versorgungsspannung VS und einem Bezugspotential BP angeordnet. Zwischen dem Lüfter L und dem Verstärker V sind in der angegebenen Reihenfolge die Drehzahlausschalteschaltung DAS, die erste nachtriggerbare Monoflopschaltung MF1 und der Integrator INT als Reihenschaltung angeschlossen.

Der Strom des Lüfters wird mit Hilfe des Shunt-Widerstandes Rs erfasst. Die daran abfallende Spannung wird in der Drehzahlausschalteschaltung DAS auf Kommutierungsimpulse des Lüfters untersucht. Die Drehzahlausschalteschaltung DAS filtert die erkannten Kommutierungsimpulse heraus. Die herausgefilterten Kommutierungsimpulse triggern die erste nachtriggerbare Monoflopschaltung MF1, der eine erste Zeitkonstante ZK1 zugeordnet ist. Die erste nachtriggerbare Monoflopschaltung MF1 wird jeweils mit ihrer vollen Impulslänge entsprechend der ersten Zeitkonstante ZK1 nachgetriggert, wenn sie während der Zeit, in der die erste nachtriggerbare Monoflopschaltung MF1 logisch High geschaltet ist, erneut einen Ansteuerimpuls erhält.

Der Lüfter L weist Antriebsspulen auf, die im Betrieb kommutiert werden. Durch die Kommutierung der Lüfterantriebsspulen entstehen auf den Versorgungsleitungen des Lüfters L Kommutierungsimpulse, die sich dem Lüfterversorgungsstrom überlagern. Im fehlerfreien Fall treten nur reguläre Kommutierungsimpulse mit einem entsprechend zugehörigen regulären Kommutierungsabstand $T_{reg}$ auf. Der reguläre Kommutierungsabstand hängt von der Drehzahl des Lüfters L ab. Im realen Fall folgen den regulären Kommutierungsimpulsen manchmal Störimpulse. Die Störimpulse treten ungefähr mit einem Störabstand $T_{stör}$ von 10 bis 25% des regulären Kommutierungsabstands $T_{reg}$ auf. In dem besonderen Betriebsfall, dass die Versorgungsspannung VS des Lüfters L sehr niedrig ist, kann es zu einer Oszillation des Versorgungsstroms kommen. Es treten dann statt Kommutierungsimpulsen Oszillationsimpulse mit einem Oszillationsabstand $T_{osz}$ auf.

Die erste Zeitkonstante ZK1 der ersten nachtriggerbaren Monoflopschaltung MF1 ist beispielsweise auf 50% eines erwünschten regulären Kommutierungsabstands $T_{reg}$ eingestellt. Ein erwünschter regulärer Kommutierungsabstand $T_{reg}$ bedeutet eine vorgegebene Lüfterdrehzahl, die sogenannte Nenndrehzahl. Umgekehrt wird eine erwünschte Nenndrehzahl durch Wahl einer entsprechenden ersten Zeitkonstante ZK1 der ersten nachtriggerbaren Monoflopschaltung MF1 eingestellt, die einen zugehörigen regulären Kommutierungsabstand $T_{reg}$ zur Folge hat.

Im eingeschwungenen Zustand ist das Verhältnis von regulärem Kommutierungsabstand $T_{reg}$ zu erster Zeitkonstante ZK1 im angesprochenen Beispielfall 2:1.

Der auf die erste nachtriggerbare Monoflopschaltung MF1 nachfolgende Integrator INT regelt über den Verstärker V die Versorgungsspannung VS für den Lüfter L. Immer, wenn die erste nachtriggerbare Monoflopschaltung MF1 logisch High geschaltet ist, regelt der Integrator INT die Versorgungsspannung VS abwärts. Umgekehrt, wenn die erste nachtriggerbare Monoflopschaltung MF1 logisch Low geschaltet ist, regelt der Integrator INT die Versorgungsspannung VS des Lüfters aufwärts. Im angesprochenen Beispielfall ist die Anstiegs- bzw. Abfallgeschwindigkeit betragsmäßig gleich (Symmetriefall).

Wie Figur 2 zeigt, ist zwischen der Drehzahlausschalteschaltung DAS und der ersten nachtriggerbaren Monoflopschaltung MF1 eine zweite nachtriggerbare Monoflopschaltung MF2 mit einer zweiten Zeitkonstante ZK2 angeordnet. Die zweite Zeitkonstante ZK2 hat im vorliegenden Ausführungsbeispiel eine zeitliche Länge von 10% des maximalen regulären Kommutierungsabstands $T_{reg}$. Treffen Oszillationsimpulse ein, die in einem kürzeren Abstand als 10% des Kommutierungsabstands $T_{reg}$ auftreten, wird die zweite nachtriggerbare Monoflopschaltung MF2 fortwährend nachgetriggert. Die erste nachtriggerbare Monoflopschaltung MF1 wird daher nicht jedesmal mitgetriggert, so dass die erste nachtriggerbare Monoflopschaltung nach einer Zeit von $0{,}5 T_{reg}$ in den logisch Low geschalteten Zustand übergehen kann. Der Integrator regelt über den Verstärker V die Versorgungsspannung VS des Lüfters L solange aufwärts, bis die Oszillation aufhört. Die zweite nachtriggerbare Monoflopschaltung MF2 wird dann durch die regulären Kommutierungsimpulse in den logischen High-Zustand geschaltet. Nach Ablauf der dazugehörigen zweiten Zeitkonstante ZK2 erfolgt ein Rückübergang in den logischen Low-Zustand. Anschließend ist die zweite nachtriggerbare Monoflopschaltung MF2 für den nächsten regulären Kommutierungsimpuls bereit.

Die erste nachtriggerbare Monoflopschaltung MF1 ist bedingt nachtriggerbar. Ist die erste nachtriggerbare Monoflopschaltung MF1 logisch High geschaltet, kann es gemäß dem vorliegenden Ausführungsbeispiel erst nach Ablauf von 50% der zugrunde liegenden ersten Zeitkonstante ZK1 nachgetriggert werden. Eine Verfälschung der Drehzahl durch Störimpulse ist verhindert, da diese innerhalb der nicht nachtriggerbaren Zeit der ersten nachtriggerbaren Monoflopschaltung MF1 auftreten. Ein Einrasten der Drehzahl des Lüfters L erfolgt nicht, da die erste nachtriggerbare Monoflopschaltung MF1 dann in der nachtriggerbaren Zeit nachgetriggert werden würde.

Eine Drehzahleinstellung des Lüfters L ist durch Einstellung der ersten Zeitkonstante ZK1 der ersten nachtriggerbaren Monoflopschaltung Mfl möglich. Die Frequenz ergibt sich für das oben angesprochene Ausführungsbeispiel nach der Beziehung:

$$f = \frac{1}{2 * t_{1reg}}$$

Die zweite nachtriggerbare Monoflopschaltung MF2 bleibt unverändert. Die zugehörige Zeitkonstante ZK2 darf maximal so groß sein wie der zu erwartende kürzeste zu erwartende reguläre Kommutierungsabstand.

Bei einem abgeänderten Ausführungsbeispiel ist die zweite nachtriggerbare Monoflopschaltung MF2 mit der gewünschten Nenndrehzahl des Lüfters L abgestimmt und hat in diesem Ausführungsbeispiel eine zweite Zeitkonstante ZK2 mit einer Zeitlänge von 50% der ersten Zeitkonstante ZK1. Damit gilt für dieses Beispiel im eingeschwungenen Zustand der Schaltungsanordnung folgendes Zeitverhältnis:

$$T_{reg} = 2 * ZK1 = 4 * ZK2 .$$

In diesem Ausführungsbeispiel ist die erste nachtriggerbare Monoflopschaltung MF1 ohne jede Bedingung nachtriggerbar. Die zweite nachtriggerbare Monoflopschaltung MF2 übernimmt die Unterdrückung der Oszillations- und der Störimpulse.

**Patentansprüche**

1. Schaltungsanordnung zum Regeln der Drehzahl eines Lüfters, der Lüfterantriebsspulen hat, an denen Kommutierungsvorgänge stattfinden, die als Kommutierungsimpulse in Form von regulären Kommutierungsimpulsen jeweils mit einem zeitlichen regulären Kommutierungsabstand allein oder zusammen mit jeweils in einem zeitlichen Störabstand nacheilenden Störimpulsen beziehungsweise in Form von Oszillationsimpulsen auf dem Lüfter zugeordneten Versorgungsleitungen bemerkbar sind, mit

einer die Kommutierungsimpulse herausfilternden Drehzahlausschalteschaltung,
einer der Drehzahlausschalteschaltung nachgeschalteten ersten nachtriggerbaren Monoflopschaltung, der eine die Drehzahl des Lüfters und damit die Kommutierungsabstände verändernde, zum Zeitpunkt eines eingeschwungenen Zustands des Lüfters mit dem regulären Kommutierungsabstand in einem festen Verhältnis stehende erste Zeitkonstante zugeordnet und die durch die herausgefilterten Kommutierungsimpulse jeweils für die Zeitdauer der ersten Zeitkonstante aktiv geschaltet ist, und
einem Integrator, durch den direkt oder indirekt eine Versorgungsspannung des Lüfters zur Durchführung der Drehzahlregelung während eines jeweiligen logischen High-Schaltens der ersten nachtriggerbaren Monoflopschaltung fortwährend abwärts und während eines jeweiligen logischen Low-Schaltens der ersten nachtriggerbaren Monoflopschaltung fortwährend aufwärts geregelt ist, **dadurch gekennzeichnet, dass** zwischen der Drehzahlauswerte- (DAS) und der ersten nachtriggerbaren Monoflopschaltung (MF1) eine zweite nachtriggerbare Monoflopschaltung (MF2) mit einer fest eingestellten zweiten Zeitkonstante (ZK2) größer dem zeitlichen Oszillationsabstand ($T_{osz}$) vorgesehen ist, und dass die Nachtriggerbarkeit der ersten nachtriggerbaren Monoflopschaltung (MF1) nach einem jeweiligen aktiv Schalten der ersten nachtriggerbaren Monoflopschaltung (MF1) für eine Zeitdauer größer dem zeitlichen Störabstand ($T_{stör}$) gesperrt geschaltet ist.

2. Schaltungsanordnung nach Anspruch 1, **dadurch gekennzeichnet, dass** die zweite nachtriggerbare Monoflopschaltung (MF2) eine fest eingestellte zweite Zeitkonstante (ZK2) größer dem zeitlichen Störabstand ($T_{stör}$) und kleiner der ersten Zeitkonstante (ZK1) aufweist.

3. Schaltungsanordnung zum Regeln der Drehzahl eines Lüfters, der Lüfterantriebsspulen hat, an denen Kommutierungsvorgänge stattfinden, die als Kommutierungsimpulse in Form von regulären Kommutierungsimpulsen jeweils mit einem zeitlichen regulären Kommutierungsabstand allein oder zusammen mit jeweils in einem zeitlichen Störabstand nacheilenden Störimpulsen beziehungsweise in Form von Oszillationsimpulsen auf dem Lüfter zugeordneten Versorgungsleitungen bemerkbar sind, mit

einer die Kommutierungsimpulse herausfilternden Drehzahlausweerteschaltung,
einer der Drehzahlausweerteschaltung nachgeschalteten ersten nachtriggerbaren Monoflopschaltung, der eine die Drehzahl des Lüfters und damit die Kommutierungsabstände verändernde, zum Zeitpunkt eines eingeschwungenen Zustands des Lüfters mit dem regulären Kommutierungsabstand in einem festen Verhältnis stehende erste Zeitkonstante zugeordnet und die durch die herausgefilterten Kommutierungsimpulse jeweils für die Zeitdauer der ersten Zeitkonstante aktiv geschaltet ist, und
einem Integrator, durch den direkt oder indirekt eine Versorgungsspannung des Lüfters zur Durchführung der Drehzahlregelung während eines jeweiligen logischen High-Schaltens der ersten nachtriggerbaren Monoflopschaltung fortwährend abwärts und während eines jeweiligen logischen Low-Schaltens der ersten nachtriggerbaren Monoflopschaltung fortwährend aufwärts geregelt ist, **dadurch gekennzeichnet, dass** zwischen der Drehzahlauswerte- (DAS) und der ersten nachtriggerbaren Monoflopschaltung (MF1) eine zweite nachtriggerbare Monoflopschaltung (MF2) mit einer variablen, parallel und gleichsinnig mit der ersten Zeitkonstante (ZK1) variierten zweiten Zeitkonstante (ZK2) größer einem durch die erste Zeitkonstante (ZK1) jeweils bedingten Störabstand ($T_{stör}$) und kleiner der ersten Zeitkonstante (ZK1) vorgesehen ist.

**Claims**

1. Circuit arrangement for controlling the speed of a fan which has fan drive coils on which commutation processes take place which are noticeable as commutation pulses in the form of regular commutation pulses which are each at a regular commutation time interval alone or together with interference pulses which respectively lag at an interference time interval or in the form of oscillation pulses on supply lines associated with the fan, having

a speed evaluation circuit which filters out the commutation pulses,
a first retriggerable monoflop circuit, connected downstream of the speed evaluation circuit, which has an associated first time constant (which alters the speed of the fan and hence the commutation intervals and is in a fixed ratio with the regular commutation interval at the time of a steady state in the fan) and is activated by the filtered-out commutation pulses for the respective period of the first time constant, and an integrator which directly or indirectly decreases a supply voltage for the fan continuously during a respective logic high switching operation in the first retriggerable monoflop circuit and increases it continuously during a respective logic low switching operation in the first retriggerable monoflop circuit in order to perform the speed control, **characterized in that** between the speed evaluation circuit (DAS) and the first retriggerable monoflop circuit (MF1) there is a second retriggerable monoflop circuit (MS2) having a firmly set second time constant (ZK2) larger than the oscillation time interval ($T_{osc}$), and **in that** the retriggerability of the first retriggerable monoflop circuit (MF1) is disabled for a period greater than the interference time interval ($T_{interf}$) after the first retriggerable monoflop circuit (MF1) has been respectively activated.

2. Circuit arrangement according to Claim 1, **characterized in that** the second retriggerable monoflop circuit (MF2) has a firmly set second time constant (ZK2) greater than the interference time interval ($T_{interf}$) and less than the first time constant (ZK1).

3. Circuit arrangement for controlling the speed of a fan which has fan drive coils on which commutation processes take place which are noticeable as commutation pulses in the form of regular commutation pulses which are each at a regular commutation time interval alone or together with interference pulses which respectively lag at an interference time interval or in the form of oscillation pulses on supply lines associated with the fan, having

a speed evaluation circuit which filters out the commutation pulses,
a first retriggerable monoflop circuit, connected downstream of the speed evaluation circuit, which has an associated first time constant (which alters the speed of the fan and hence the commutation intervals and is in a fixed ratio with the regular commutation interval at the time of a steady state in the fan) and is activated by the filtered-out commutation pulses for the respective period of the first time constant, and an integrator which directly or indirectly decreases a supply voltage for the fan continuously during a respective logic high switching operation in the first retriggerable monoflop circuit and increases it continuously during a respective logic low switching operation in the first retriggerable monoflop circuit in order to perform the speed control, **characterized in**

**that** between the speed evaluation circuit (DAS) and the first retriggerable monoflop circuit (MF1) there is a second retriggerable monoflop circuit (MF2) having a variable second time constant (ZK2), which is varied in parallel with and in the same sense as the first time constant (ZK1), greater than a respective interference interval ($T_{interf}$) brought about by the first time constant (ZK1) and less than the first time constant (ZK1).

## Revendications

**1.** Circuit pour la régulation de la vitesse de rotation d'un ventilateur qui comprend des bobines d'entraînement de ventilateur au niveau desquelles se produisent des opérations de commutation qui sont remarquables sur des lignes d'alimentation associées au ventilateur comme impulsions de commutation sous la forme d'impulsions de commutation régulières à chaque fois avec un écart de commutation régulier temporel soit seules soit conjointement avec des impulsions parasites en retard selon un certain rapport signal / bruit temporel ou sous la forme d'impulsions d'oscillation, comprenant

un circuit d'évaluation de vitesse de rotation filtrant les impulsions de commutation,
une première bascule monostable redéclenchable qui est branchée du côté aval du circuit d'évaluation de vitesse de rotation, à laquelle est associée une première constante de temps, modifiant la vitesse de rotation du ventilateur et donc les écarts de commutation et se trouvant dans un rapport fixe avec l'écart de commutation régulier à l'instant d'un régime permanent du ventilateur, et qui est commutée à l'état actif par les impulsions de commutation filtrées à chaque fois pour la durée de la première constante de temps, et
un intégrateur par lequel est régulée directement ou indirectement une tension d'alimentation du ventilateur pour la mise en oeuvre de la régulation de vitesse de rotation continuellement vers le bas pendant une commutation respective de la première bascule monostable redéclenchable dans l'état logique haut et continuellement vers le haut pendant une commutation respective de la première bascule monostable redéclenchable dans l'état logique bas, **caractérisé par le fait qu'**il est prévu entre le circuit d'évaluation de vitesse de rotation (DAS) et la première bascule monostable redéclenchable (MF1) une deuxième bascule monostable redéclenchable (MF2) avec une deuxième constante de temps (ZK2) fixée supérieure à l'écart d'oscillation temporel ($T_{osz}$) et que la redéclenchabilité de la première bascule monostable redéclenchable (MF1) après une commutation respective à l'état actif de la première bascule monostable redéclenchable (MF1) est bloquée pour une durée supérieure au rapport signal / bruit temporel ($T_{stör}$).

**2.** Circuit selon la revendication 1, **caractérisé par le fait que** la deuxième bascule monostable redéclenchable (MF2) a une deuxième constante de temps (ZK2) fixée supérieure au rapport signal / bruit temporel ($T_{stör}$) et inférieure à la première constante de temps (ZK1).

**3.** Circuit pour la régulation de la vitesse de rotation d'un ventilateur qui comprend des bobines d'entraînement de ventilateur au niveau desquelles se produisent des opérations de commutation qui sont remarquables sur des lignes d'alimentation associées au ventilateur comme impulsions de commutation sous la forme d'impulsions de commutation régulières à chaque fois avec un écart de commutation régulier temporel soit seules soit conjointement avec des impulsions parasites en retard selon un certain rapport signal / bruit temporel ou sous la forme d'impulsions d'oscillation, comprenant

un circuit d'évaluation de vitesse de rotation filtrant les impulsions de commutation,
une première bascule monostable redéclenchable qui est branchée du côté aval du circuit d'évaluation de vitesse de rotation, à laquelle est associée une première constante de temps, modifiant la vitesse de rotation du ventilateur et donc les écarts de commutation et se trouvant dans un rapport fixe avec l'écart de commutation régulier à l'instant d'un régime permanent du ventilateur, et qui est commutée à l'état actif par les impulsions de commutation filtrées à chaque fois pour la durée de la première constante de temps, et
un intégrateur par lequel est régulée directement ou indirectement une tension d'alimentation du ventilateur pour la mise en oeuvre de la régulation de vitesse de rotation continuellement vers le bas pendant une commutation respective de la première bascule monostable redéclenchable dans l'état logique haut et continuellement vers le haut pendant une commutation respective de la première bascule monostable redéclenchable dans l'état logique bas, **caractérisé par le fait qu'**il est prévu entre le circuit d'évaluation de vitesse de rotation (DAS) et la première bascule monostable redéclenchable (MF1) une deuxième bascule monostable redéclenchable (MF2) avec une deuxième constante de temps (ZK2) variable qui varie en parallèle et dans le même sens que la première constante de temps (ZK1) et qui est supérieure à un rapport signal / bruit ($T_{stör}$) conditionné par la première constante de temps (ZK1) et inférieure à la première constante de temps (ZK1).

FIG 1

FIG 2